Europäisches Patentamt

European Patent Office

Office européen des brevets

(19)

(11) Publication number: **0 186 230**
**A2**

(12) # EUROPEAN PATENT APPLICATION

(21) Application number: **85201952.0**

(22) Date of filing: **26.11.85**

(51) Int. Cl.⁴: **G 06 F 12/10**

(30) Priority: **21.12.84 US 684547**

(43) Date of publication of application:
**02.07.86 Bulletin 86/27**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Kaplinsky, Cecil Hertz**
**c/o INT. OCTROOIBUREAU B.V. Prof. Holstlaan 6**
**NL-5656 AA Eindhoven(NL)**

(72) Inventor: **Hage, Cornelis Goyert**
**c/o INT. OCTROOIBUREAU B.V. Prof. Holstlaan 6**
**NL-5656 AA Eindhoven(NL)**

(74) Representative: **Strijland, Wilfred et al,**
**INTERNATIONAAL OCTROOIBUREAU B.V. Prof.**
**Holstlaan 6**
**NL-5656 AA Eindhoven(NL)**

(54) Memory access controller with parallel checking of virtual address and action word.

(57) A memory access controller is provided for parallel checking of a supplied virtual address and an action word annexed thereto. The action word is first encoded by means of an encoder before checking in an attribute content addressable memory (CAM). An illegal action word is detected and causes a MISS signal from the CAM. Irrelevant bits of the action word set match signals in the attribute CAM. A parallel set of match result supplied by the attribute CAM and match result supplied by the address CAM, provided for storing the physical address obtained by translation of the virtual address, is made and supplied on a match result line.

Memory access controller with parallel checking of virtual address and action word.

The invention relates to  a memory access controller comprising: an address memory having a first address input for receiving virtual addresses supplied by a data processor and being provided for storing physical addresses obtained by translation of virtual addresses; first checking means connected to said address memory and being provided for checking whether for a received virtual address there is stored in the address memory a corresponding physical address and for generating a first match signal if a corresponding physical address is present; an attribute memory being provided for storing an attribute word for each physical address present in the address memory; input means being provided for receiving action words which are supplied by the processor annex to virtual addresses and for forming a second attribute word upon a received action word; second checking means connected to said input means and said attribute memory and being provided for checking whether a received second attribute word corresponds to one of the first attribute words and for generating substantially simultaneously with said first match signal a second match signal upon correspondence; a match result circuit being provided for logically combining said first and second match signal only if said second match signal was generated upon correspondence with the first attribute word annex to the physical address corresponding to the supplied virtual address and for generating a result signal from said logical combination.

Such a memory access controller is described in a previous international patent application published under the PCT No. WO85/00232. In the described memory access controller the address memory and the first checking means are combined in an address CAM (Content Addressable Memory). Even so the attribute memory and the second checking means are combined in an attribute CAM. A virtual address and his annexed action word are presented in parallel to the memory access controller. When a physical address, representing the translation of the supplied virtual address, is present in the address CAM a first match signal is generated. When a first attribute word

corresponding to the supplied action word is present in the attribute CAM a second match signal is generated. Because the virtual address and its annexed action word are presented in parallel, the first and the second match signal are generated substantially simultaneously. Both the first and the second match signal are presented to a match result circuit which is formed by a series of logic AND gates. If the second match signal was generated upon correspondence with the first attribute word annex to the physical address corresponding to the supplied virtual address, both the first and the second match signal are presented to the same logic AND gate and a result match signal is generated which signifies that the action at the required address is allowed. If the second match signal was generated upon correspondence with a first attribute word annex to another physical address than the one corresponding to the supplied virtual address, then the first and the second match signal are presented to different logic AND gates and there is no result match signal generated which signifies that the action is not allowed.

A memory access controller according to the present invention is different from the one described in the cited international patent application in that the action word is supplied to an encoder which forms thereupon a second attribute word, said encoder being provided for encoding an action word, supplied annex to a virtual address by said data processor, to a second attribute word according to a coding pattern which, in case that the bits of the supplied action word have an equal contribution to the checking result, forms a second attribute word respecting the original content of the supplied action word, and which, in case that at least one of the bits of the supplied action word has a dominant contribution to the checking result, forms a second attribute word having, with respect to the original content of the action word, a modified content in order to impose a predetermined checking result to the checking of at least one predetermined bit of the formed second attribute word with its correspondent bit of the first attribute word.

Thus by using an encoder situations wherein one or more bits of a supplied action word plays a dominant contribution to the checking result can be taken into account. The encoder enables the memory access controller to realize more than a one-to-one comparison between a supplied action word and a stored first attribute word stored in the attribute memory. By modifying the content of the supplied action word a predetermined checking result can be imposed on the checking, which predetermined checking result reflects the dominant contribution of that one (or more) bit(s) of the supplied action word. Thus at the one side a non-dominant action bit can never block an action required by a dominant action bit, and at the other side an illegal action can be prohibited even in the case that there should be correspondence between the first attribute word and the supplied action word.

A first preferred embodiment of a memory access controller according to the invention wherein said address and said attribute memories are formed by a CAM is characterized in that an action bit is encoded to a first value in order to result correspondence by said checking in case that said action bit does not contribute dominantly to said checking result. This offers an advantageous encoding, when a CAM is used, for encoding an action bit which does not contribute dominantly to said checking result.

A second preferred embodiment of a memory access controller according to the invention wherein said address and attribute memories are formed by a CAM is characterized in that an action bit is encoded to a second value in order to result non-correspondence by said checking in case that said action bit contributes dominantly to said checking result and implies an illegal action regardless the bit value of the corresponding bit of the first attribute word to which it is compared. This offers an advantageous encoding, when a CAM is used, for encoding a dominant action bit.

The encoder is preferably realized in the form of a ROM when a fixed encoding pattern is used and in the form of a PLA, an EPROM or EEPROM when changing of the encoding pattern is necessary.

The invention will now be described with reference to the accompanying drawings, in which:

Figure 1 illustrates a method, called segmentation, for dividing the virtual address space;

Figure 2 illustrates a method, called two level paging, for dividing the virtual address space;

Figure 3 illustrates a method, called segmentation with paging, for dividing the virtual address space;

Figure 4 shows an example of a segment descriptor for a paged non-contiguous segment;

Figure 5 shows an example of a segment descriptor for a paged contiguous segment;

Figure 6 gives an example of a prior art solution of the problem of controlling whether an action required by the processor at a given address is allowable;

Figure 7 shows an example of a CAM cell;

Figure 8 illustrates a CAM containing four words of three bits each;

Figure 9 shows a first embodiment of a translation match unit which is part of the MAC;

Figure 10 shows a second embodiment of a translation match unit, which unit comprises an encoder for encoding the action words presented.

The present invention is applicable in a data processing system which comprises a Memory Access Controller (hereinafter called a MAC), which is provided for controlling a cache memory and which also acts as a memory management unit and which offers a large, linear virtual address space. Such a memory access controller is described in detail in the article of C. Kaplinsky and M. Freeman entitled "Memory controller gives a microprocessor a big mini's throughput" and published in Electronic Design of August 23, 1984, pages 153-164.
In the data processing system the MAC is placed between the central processing unit and the memory device. The memory device generally comprises a cache memory and several memory modules including a main memory and an external memory such as a disk. The MAC handles all the processor requests to memory modules and completely controls the cache memory. The MAC makes use of virtual addresses, which is a means of allowing the programmer to use an address space which may be quite different from the range of physical memory locations available to him. The virtual address space provided may be smaller than, equal to, or greater than the physical address space.

There are for example three methods of subdividing the virtual address space managed by the MAC, i.e.

a) segmentation

b) two-level paging

c) segmentation with paging.

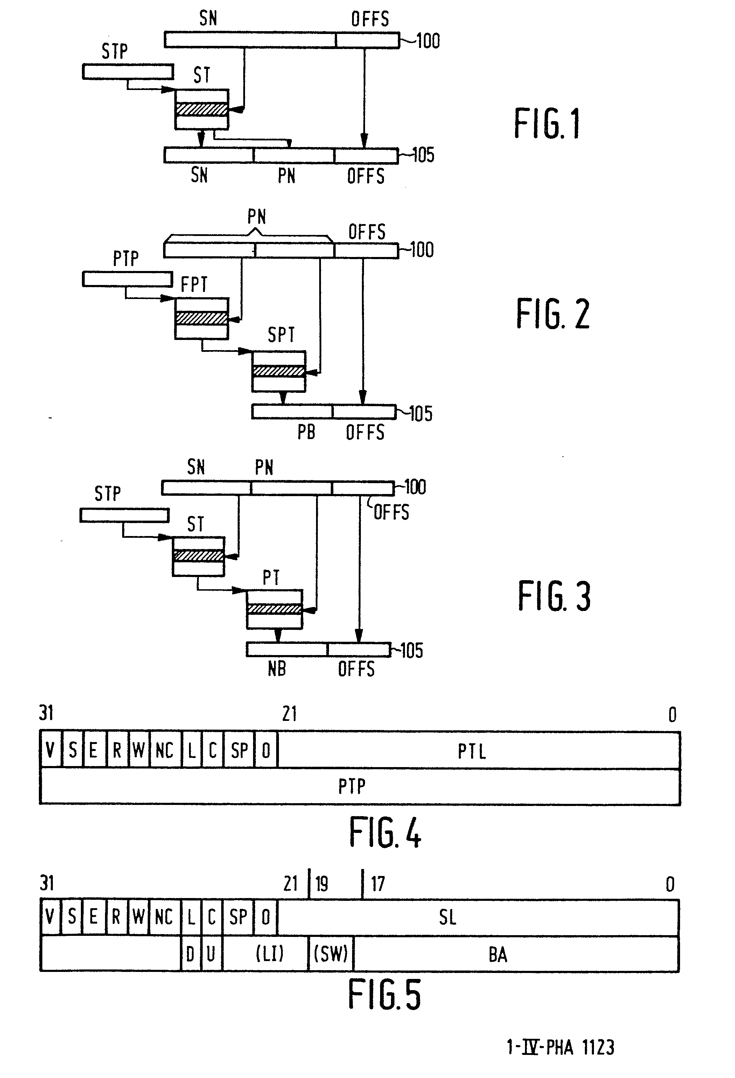

The first method (segmentation) is illustrated in Figure 1. This first method divides the virtual address space (100) into segments that are continuous in memory. A virtual address is then composed of a segment number (SN) and an offset (OFFS). When segmentation is used, the MAC is always provided with a number of segment tables. A first part of the segment number indicates a segment table pointer (STP) which on its turn indicates a selected segment table wherein segment descriptors are stored. Those segment descriptors contain the base address of the segment in physical memory as well as the length of the segment. The physical address which has to be generated in order to access a location in the main memory is generated as given hereunder. A second part of the segment number (SN) of the virtual address indicates a location in the selected segment table (ST). At that indicated location in the segment table there is stored a segment descriptor. The segment length which is present in that descriptor is compared with the offset (OFFS) of the virtual address in order to check if the offset does not exceed the segment length. If this should be the case an interrupt is generated. If on the other hand the segment length is compatible with the local memory capacity, the offset is added to the segment basis (SN + PN) present in the descriptor and the physical address (105) is herewith generated. The advantage of segmentation is that the designer can choose a maximum length for a segment because the segment length can be adapted to the length of the program or data to be loaded.

The second method, called two-level paging, is illustrated in Figure 2. In this method the virtual address space (100) is divided into pages of fixed sizes, with each page configured to be for example 1K, 2K, 4K or 8K bytes long. When two-level paging is used there is no check on the offset in order to form the physical address because the pages have fixed length. Paging partitions physical main memory into same-sized page frames and secondary memory (e.g. the system disk) into pages. The paging mechanism transfers pages from secondary memory to page frames in main memory when necessary and, given a logical address, it performs the mapping operation, i.e. determining which page a logical address refers to and finding the associated page frame.

A virtual address (100) comprises a page number PN and an offset (OFFS). The page number is viewed in two parts. A first part indicates a page table pointer (PTP) which on its turn indexes a first level page table (FPT). The first level page table FPT contains descriptors, each of which consists of a page table length field and a pointer. A few bits of the first part of the page number indicates a descriptor within the first level page table. The pointer of that descriptor points to a second level page table (SPT). A second part of the page number is used as an index into that indicated second level page table (SPT). The second level page table contains the page descriptors. A page descriptor contains attribute fields for protection codes, action codes, history information, and the physical address of the page frame. The final physical address (105) is formed by the concatenation of the page frame number (PB) with the offset (OFFS) field of the virtual address.

The advantage of paging is that the pages have a fixed length which implies that when a page is removed and replaced by another one, the accessible memory space will again be completely occupied.

The third method, called segmentation with paging, is illustrated in Figure 3. In this method the virtual address space (100) is divided into segments, but unlike the first method, the segments are not contiguous. Instead the pages can be scattered throughout the memory. Each of the segments is divided into a number of pages which have a fixed length. This method thus combines the advantages of the first and the second method.

In this method, when the memory management unit of the MAC is called upon to translate a virtual address, the virtual address is broken up into three fields: the segment number (SN), the page number (PN), and the offset (OFFS). The fields are not contiguous but scattered throughout the memory. Each segment is divided into a number of pages which have a fixed length. In order to translate a virtual address received from the processor, the MAC is provided with segment table memories wherein segment descriptors are stored, even as with page table memories wherein page descriptors are stored.

The physical address which has to be generated in order to access a location in the memory is generated as given hereunder. The segment number (SN) or at least a part of it is used to address a segment table pointer (STP) which points to a segment table register

0186230
29.10.1985

(ST). A location in that pointed segment table is indexed by a part of the segment number in order to obtain the associated segment descriptor. Each of the segment descriptors indexes a page table wherein the page descriptors of the different pages of that segment are stored.

The page number is then used as an index into the page table (PT) pointed to by the segment descriptor. The page descriptor is then obtained which contains the physical frame address (NB). This address when concatenated with the offset (OFFS) yields the desired physical address (105). In order to describe the operation of the invention, the concept of descriptor will first be explained. As already mentioned the segment descriptors, respectively the page descriptors are stored in the segment table (ST) respectively the page table (PT; FPT, SPT).

Figure 4 shows an example of the format of a 32-bits segment descriptor in the segment table for a paged (non-contiguous) segment, and Figure 5 shows an example of the format of a segment descriptor for a contiguous segment.

A segment descriptor as illustrated in Figure 4 comprises three fields:

a) The Page Table Pointer (PTP)

This (32-bit) field contains the pointer to the page table which defines the current segment.

b) The Page Table Length (PTL)

This (22-bit) field contains the page number of the last page in the segment. The number of pages then represents a parameter indicating the capacity of the segment.

c) Segment Protection

This field contains the attribute bits which define the status of the segment. Each use of segment may be protected differently depending on the permissions granted to the  process accessing this segment. This field comprises for example 10 bits which have the following signification:

1. Valid Bit (V).

This bit is used to indicate whether the segment is valid or not.

2. Supervisor Permission (S).

If this bit is set, supervisor permission delivered by the processor is necessary to access this segment.

0186230

3. Access Permission Bits (R, W, E).

If these bits are set, corresponding access is available for the segment:

Read Access (R)

Write Access (W)

Execute Access (E)

4. The following three bits define the mapping of the segment:

a) Non-Cacheable (NC)

If this bit is set the associated segment may not be brought into the cache memory. If the associated segment comprises semaphores or could be used by two processors or I/O units concurrently it should be so marked.

b) Local (L)

If this bit is set, pages of the associated segment are present in the local memory attached to the processor.

c) Contiguous (C)

If this bit is set the associated segment does not have a page table. Only one segment, which should be mapped into memory as a whole, is present.

5. Software Protection (SP)

This bit is usable by the software of the system. If this bit is set, a trap will be generated the first time the associated segment is accessed. Subsequent accesses to the segment may or may not generate a trap. Thus, the trap handling software should either reset this bit after the first interrupt, or should be capable of handling multiple traps. This bit is meant to provide a software filter for entry into segments.

6. Offset Bit (O)

This bit is used to denote whether pages of a segment start at the top or bottom of the segment's virtual address space.

The segment descriptors have a acccess permission. Thus a segment may have a read (R) permission, write (W) permission, or (E) execute permission. A read only segment would only have its R bit set, while a read/write segment would have both R and W bits set. Accessing a segment without proper permission causes what is termed an access violation. The MAC in this case causes a bus error (BERR), so that the operating system (OS) can decide what should be done.

0186230
29.10.1985

Some segments may only be accessed in the supervisor mode, these segments will have their associated segment descriptor supervisor (S) permission bit set, otherwise an access violation will occur.

It will be clear that other more sophisticated attributes for controlling access and protecting portions of the memory can also be used.

In order not to repeat the translation operation of translating a virtual address into a physical address for every virtual address supplied by the processor to the MAC, the translation look-aside buffer of the MAC is provided with a memory wherein there are stored physical addresses obtained by translation. That memory is realized as a CAM (Content Addressable Memory). Thus when a virtual address is presented to the MAC, it is supplied to the CAM wherein there is checked if the supplied virtual address is present. If the supplied virtual address is present the corresponding physical address is outputted, if not then the translation operation is executed and the obtained physical address is stored in the CAM at a location indicated by the virtual address. For the purposes of further exposition, all characteristics of the protection of either access to or use of a physical address space in memory will be referred to as attributes of the physical address.

The present invention is addressed to the following problem which arises in such a system. It is often necessary, especially in a memory management unit, to determine whether an action at a given physical address is allowable. Stated otherwise, upon receipt by the MAC of an incoming signal (virtual address + action) from a processor which seeks to address a word in memory, the set of attributes annex to the physical address obtained by translation of the virtual address has to be compared with the action bits of the incoming signal. In effect, many conditions have to be checked at once. In particular, some of the attributes may affect whether the action required is even allowed.

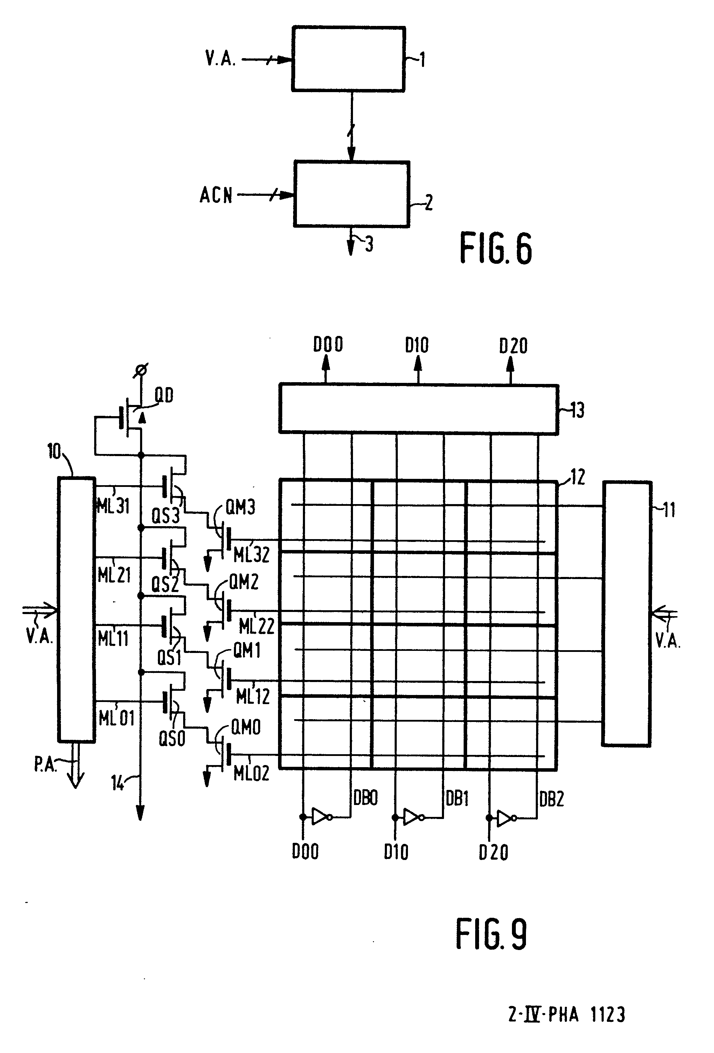

Figure 6 gives an example of a prior art solution of this problem. The virtual address (VA) is supplied to an address CAM(1), which thereupon (when present) outputs the physical address and the attributes associated with that physical address. The outputted attributes are presented to a comparator 2 to which there is also presented the action bits supplied by the processor together with the virtual address. In the comparator (2) the attributes are then compared with the action and if they correspond a match signal is supplied on line 3, if not then a miss signal is supplied. Thus with this method two operations, accessing memory and comparing the data, are done in series.

In the present invention said two operations are done in parallel. Therefore in a MAC according to the present invention there is a further memory within the translation look-aside buffer. That further memory is also preferably a CAM, called attribute CAM. In the attribute CAM, which has a capacity for storing as many words as the address CAM, there is stored for each physical address of the address CAM its associated attribute bits.

When a virtual address and its associated action bits is now presented to the MAC, the virtual address is supplied to the address CAM and the action bits are supplied to the attribute CAM. Both operations are done in parallel.

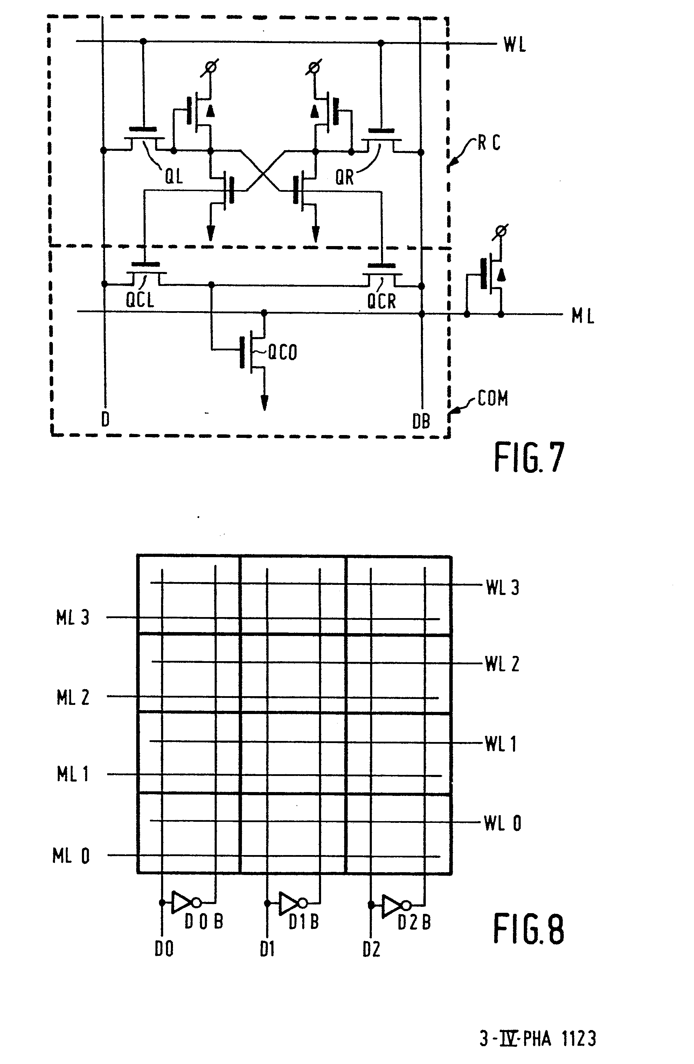

In order to better understand the operations of the present invention details of a CAM memory will first be described. A CAM memory is built of CAM cells, each of which consits of a RAM cell (RC) plus a comparator (COM), as shown in Figure 7. The comparator performs the exclusive OR function on the data stored in the RAM cell and the data being present on the data lines D and DB. The output of the compator is the match signal that is active when the stored data matches the current input signal. The matched signals of all cells of the same memory word logically are tied together, forming the match line. When this line is active, the stored memory word matches the data word present on the data lines. Figure 8 shows an example of a CAM containing four words of three bits each. CAMs can be write/compare only or read/write/compare.

The standard NMOS CAM cell of Figure 7 contains a logical 0 when QL is on and QR is off. The reverse occurs for a logical 1. The threshold voltage $V_{TE}$ of QCL, QCR and QCO is typically around 1 volt.

Assume now that the RAM cell has a 1, this implies that the QL gate voltage is low and thus that QCL is off. The QR gate voltage is high (at least 2.5 volts) so that QCR is on. Now let a 1 be supplied as the input bit for comparison with the given state of the RAM cell. This incoming one is represented by a 1 on line D (D=1) and a 0 (near 0 Volt) in line DB (DB=0) (line D and line DB are each other inverse).
Since QCL is off so as to isolate the QCO gate from the 1 on line D, QCO
is off. This represents a MATCH on the match line.

Next, let a 0 represented by a 0 on line D (D=0) and 1
(of for example 2.5 Volts or more) on line DB (DB=1) be supplied as the
incoming bit for the compator. Since QCR is on with its gate voltage at
least $2V_T$ above the QCO source voltage, the 1 on line DB causes QCO to
turn on. This is a MISS, or NO MATCH. The match line is pulled through
QCO to an inactive or low voltage condition.

Assume now that the RAM cell has a 0, in that case QL is
high so that QCL is on and QR is low so that QCR is off. When D=1 and
DB=0, the 1 supplied on line D is connected through QCL which is on to
QCO which is thus turned on, resulting in a MISS. When D=0 and DB=1, the
1 on DB is not supplied to QCO because QCR is off, thus resulting in a
MATCH.

With N words of attributes stored in a CAM, incoming
signals are compared with all of them simultaneously, causing N match
lines to show the comparison results. Selection of the word to be
compared with the input data can take place before, during or after the
actual comparison is done by applying a current to the match line
belonging to the row to be selected. This selection will only cause the
selected comparison results to be shown at the output.

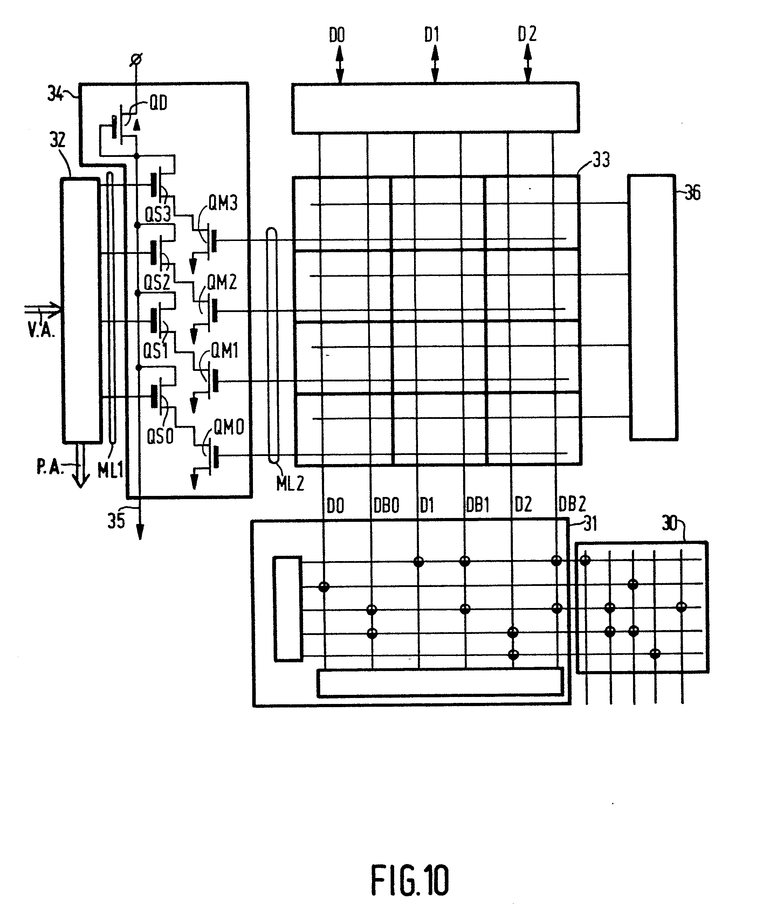

Figure 9 shows a first embodiment of a translation match
unit which is part of the MAC. The address CAM (10) receives the virtual
address (VA) and generates when present the physical address (PA). The
match lines ML01, ML11, ML21 and ML31 of the address CAM are
respectively connected to a first electrode of the transistors QS0, QS1,
QS2 and QS3. The attribute CAM (12) receives the attribute bits as
supplied by the processor via the lines D00, D10 and D20 and via the
lines DB0, DB1 and DB2 their respective inverses. The worldline select
unit 11 selects upon a received virtual address a row within the
attribute CAM. In that selected row there are present the attributes of
the physical address obtained by translation of the received virtual
address. The match lines ML02, ML12, ML22 and ML32 of this attribute CAM
are respectively connected to a first electrode of the transistors QM0,
QM1, QM2 and QM3.

Each of the transistors QS0, QS1, QS2 and QS3 have a second electrode connected to a match result line 14 and a third electrode connected to a second electrode of a respective transistor QM0, QM1, QM2 and QM3. The third electrodes of the transistors QM0, QM1, QM2 and QM3 are grounded. All QM and QS transistors are preferably enhancement transistors, while transistor QD is a deplacement transistor which is used as a switch for applying a current to the match result line 14.

In operation the translation match unit chooses upon a presented virtual address a word stored in one of the rows of both CAM's. The selected word in the attribute CAM is compared with the action word supplied by the processor on lines D00 through D20 and DB0, DB1, DB2 and presents the results of the comparison on the match result line. Assume for example the word 2 is the chosen word. The address CAM supplies zeroes to the gates of QS0, QS1 and QS3 to keep them off. This isolates the match result line from QM0, QM1 and QM3. As a consequence, the conditions on match lines ML01, ML12 and ML32 do not affect the match result.

The match select line ML21 supplies a logic 1 to the gate of QS2 to turn it on. If word 2 matches the incoming word, QC0 in each cell of word 2 is off. This places match line ML22 at logic 1, consequently QM2 turns on. QS2 and QM2 then provide a path for pulling the match result line (14) to 0 to indicate a match with selected word 2. If word 2 present in the attribute CAM (12) does not match the incoming word, QC0 and at least one cell of word 2 is on. ML22 goes to a 0 to turn off QM2. The match result is a logic 1 which represents a MISS.

The method described above using the technique of Figure 9 allows only for a straightforward one-on-one comparison of bits. However certain situations can occur wherein one or more of the action bits of the action word supplied by the processor have to be considered as "ILLEGAL" or "DON'T CARE". An action bit is considered ILLEGAL when the comparison result must obligatory result in a MISS, regardless of the bit value of the attribute bit to which it has to be compared and which is stored in the cell of the attribute CAM. Consider for example the case that for a given action the Execute access bit E=0 and Write access bit W=1. This is an illegal combination because the Execute bit has a dominant contribution to the comparison result, thus when execute access is forbidden (E=0), write access should also be forbidden. The bit W=1 has thus to be considered as "illegal", and regardless of the value of the W attribute bit is the addressed location of the attribute CAM the comparison result should yield a MISS.

An action bit is considered DON'T CARE when the comparison result is not relevant in view of the comparison result of one or more other attribute bits of the action word supplied by the processor, which other attribute bit(s) have a more dominant contribution to the comparison result. Consider for example the case that for a given action the Supervisor permission is set (S=1) and the read access bit R=1, but in the attribute CAM R=0 on the location to be considered. Because when S=1 all actions are allowed to the processor it would have no sense to block this action by a read bit on the addressed location in the attribute CAM which has R=0. But a straightforward one-on-one comparison would block this action by a negative comparison result. Such situation can be avoided by considering that action bit (R) as DON'T CARE. The proposed solution of the present invention is shown in Figure 10.

The translation-match unit shown in Figure 10 comprises an address CAM 32 and an attribute CAM 33. The processor supplies virtual addresses to the translation match unit. When the supplied virtual address is present in the address CAM 32, it is translated into a physical address and a MATCH signal is supplied to one of the match lines ML1. The attribute CAM stores the first attribute words for the different physical addresses stored in the address CAM. The first attribute word annex to the selected physical address is selected by means of the row select unit 36. The compare signal input of the attribute CAM (33) is connected to an output of a encoder (31). An input of the encoder (31) is connected to an output of a register 30 to which an action word, as supplied by the processor annex to a virtual address, is presented. The virtual address and his annexed action word are supplied in parallel to the translation match unit. The match result of the attribute CAM is presented on the match lines ML2. The match lines ML1 and ML2 are respectively connected to a match result circuit 34 which outputs a match result on match result line 35.

An action word presented by the processor to register 30 is first encoded by the encoder (31) in order to form a second attribute word. That second attribute word is used to access attribute CAM (33). By encoding the action word by means of the encoder, the following possibilities for a given action can now be created:

a) Legal action Each bit of the action word has an equal contribution to the comparison result. In this case the supplied action bits are not modified and the encoder supplies them on the lines D0, D1, D2 and on the lines DB0, DB1, DB2 the inverse values of the respective action bits are supplied

b) Illegal action suppose that the action bit to be supplied to the second column of the second column of the attribute CAM is to be considered as illegal. In that case that action bit is encoded by the encoder in order to supply a logic "1" on both lines D1 and DB1. The illegal action can now be understood by referring to Figure 7 in combination with Figure 10. If the second attribute bit supplied to the second column of the attribute CAM is considered illegal, lines D1 and DB1 are both placed at 1. If now the accessed RAM cell has a 1, then QCR is on and QCL is off. Since QCR is on, the 1 on line DB1 causes QCO to turn on, resulting in a miss on the match line. If the accessed RAM cell has a 0, then QCR is off and QCL is on. Since QCL is on, the 1 on line D causes QCO to turn on, once again resulting in a miss. Thus independent of the bit value of the RAM cell, there will always result a miss in case of an illegal action.

c) Don't care action suppose now that the second attribute bit to be supplied to the third column of the attribute CAM is to be considered as Don't care. In that case that action bit is encoded by the encoder in order to supply a logic "0" on both lines D2 and DB2. Once again referring to Figures 7 and 10 and considering that the accessed RAM cell has a 1, then QCR is on and QCL is off. Since QCR is on, the 0 on line DB2 is supplied via QCR to QCO which is thus off resulting in a Match. If the accessed RAM cell has a 1, the QCL is on and QCR is off. Since QCL is on, the 0 on line D2 is supplied via QCL to QCO which is thus off, once again resulting in a Match. Thus independent of the bit value of the RAM cell, there will always result a Match in case of a DON'T CARE action. The action bits considered as DON'T CARE will thus not impose a negative comparision result.

Several realizations are possible for implementing the PLA encoder 31. The PLA encoder is for example formed by a ROM when the encoding of the action bits is fixed. A supplied action then forms an address for addressing a stored encoded action word. In another embodiment the PLA encoder is for example formed by an EPROM, a PLA, or an EEPROM, which gives the possibility to program the encoding of the action bits. Thus, the check on illegal input combinations and the provision for handling DON'T CARE situations are added by using an encoder to process the incoming data (action) before it is compared in the attribute CAM.

## CLAIMS

1.      A memory access controller comprising: an address memory having a first address input for receiving virtual addresses supplied by a data processor and being provided for storing physical addresses obtained by translation of virtual addresses; first checking means connected to said address memory and being provided for checking whether for a received virtual address there is stored in the address memory a corresponding physical address and for generating a first match signal if a corresponding physical address is present; an attribute memory being  provided for storing for each physical address present in the address memory a first attribute word; second checking means connected to said attribute memory and being provided for checking whether a second attribute word outputted from an encoder corresponds to one of the first attribute words and for generating substantially simultaneously with said first match signal a second match signal upon correspondence; said encoder being provided for encoding an action word, supplied annex to a virtual address by said data processor, to a second attribute word according to a coding pattern which, in case that the bits of the supplied action word have an equal contribution to the checking result, forms a second attribute word respecting the original content of the supplied action word, and which, in case that at least one of the bits of the supplied action word has a dominant contribution to the checking result, forms a second attribute word having, with respect to the original content of the action word, a modified content in order to impose a predetermined checking result to the checking of at least one predetermined bit of the formed second attribute word with its correspondent bit of the first attribute word; a match result circuit being provided for logically combining said first and second match signal only if said second match signal was generated upon correspondence with the first attribute word annex to the physical address corresponding to the supplied virtual address and for generating a result match signal from said logical combination.

2.      A memory access controller as claimed in Claim 1, wherein said address and said attribute memory are formed by a CAM (content addressable memory), characterized in that an action bit is encoded to a first value in order to result correspondence by said checking in case that said action bit does not contribute dominantly to said checking result.

3.        A memory access controller as claimed in Claim 1, wherein said address and said attribute memory are formed by a CAM (content addressable memory), characterized in that an action bit is encoded to a second value in order to result non-correspondence by said checking in case that said action bit contributes dominantly to said checking result and implies an illegal action regardless the bit value of the corresponding bit of the first attribute word to which it is compared.

4.        A memory access controller as claimed in any of the preceding Claims, characterized in that said encoder is formed by a PLA.

5.        A memory access controller as claimed in any of the Claims 1 to 3, characterized in that said encoder is formed by a ROM.

6.        A memory access controller as claimed in any of the Claims 1 to 3, characterized in that said encoder is formed by an EPROM or EEPROM.

FIG.1

FIG. 2

FIG. 3

FIG.4

FIG.5

FIG.6

FIG.9

0186230

FIG.7

FIG.8

FIG.10